# FASCICULE DE BREVET EUROPEEN

(11) **EP 1 217 249 B1**
(45) Date de publication et mention de la délivrance du brevet: **04.05.2005**
(21) Numéro de dépôt: 01403254.4
(22) Date de dépôt: 14.12.2001
(51) Int. Cl.: F16F 1/387, F16F 13/14, B60G 21/05

(54) **Manchon antivibratoire et véhicule automobile comportant un tel manchon**
Schwingungsdämpfendes Lager und Kraftfahrzeug mit einem solchen Lager
Anti-vibration bush and motor vehicle comprising said bush

(30) Priorité: 22.12.2000 FR 0016924
(43) Date de publication de la demande: 26.06.2002
(73) Titulaire: HUTCHINSON, 75008 Paris (FR)
(72) Inventeur: Deschaume, Alain, 18000 Bourges (FR); Medjani, Ali, 18100 Vierzon (FR); Duvallet, Christophe, 45380 La Chapelle St. Mesmin (FR); Girard, André, 18500 Mehin/Yerre (FR)
(74) Mandataire: Burbaud, Eric

(56) Documents cités:
- EP-A- 0 687 830
- DE-A- 3 240 981
- FR-A- 2 434 965
- FR-A- 2 717 236
- FR-A- 2 791 002
- GB-A- 2 351 139
- US-A- 5 655 758
- PATENT ABSTRACTS OF JAPAN vol. 1999, no. 03, 31 mars 1999 (1999-03-31) -& JP 10 339349 A (YAMASHITA RUBBER KK), 22 décembre 1998 (1998-12-22)

## Description

La présente invention est relative aux manchons antivibratoires et aux véhicules automobiles comportant de tels manchons.

Plus particulièrement, l'invention concerne un manchon antivibratoire comportant :
- une armature intérieure rigide qui s'étend longitudinalement selon un axe central,
- au moins une première armature annulaire rigide qui entoure l'armature intérieure ainsi que l'axe central,
- et au moins un corps en élastomère qui relie l'armature intérieure à la première armature annulaire, ce corps en élastomère comprenant deux bras diamétralement opposés qui s'étendent selon une première direction radiale, chacun depuis l'armature intérieure jusqu'à ladite première armature annulaire, le corps en élastomère étant conformé pour que le manchon antivibratoire présente une raideur élastique relativement élevée dans ladite première direction radiale et une raideur élastique plus faible dans une deuxième direction radiale sensiblement perpendiculaire à ladite première direction radiale.

Le document DE-A-34 41 560 décrit un exemple d'un tel manchon antivibratoire, destiné à relier un train arrière de véhicule à la caisse du véhicule. Dans ce document, l'axe central du manchon antivibratoire est disposé verticalement, ce qui procure de nombreux avantages, notamment :
- la possibilité de choisir la raideur élastique du manchon antivibratoire selon son axe central, indépendamment des raideurs selon les première et deuxième directions radiales, ce qui permet en particulier d'obtenir un manchon antivibratoire présentant une faible raideur selon son axe central, d'où un meilleur confort du véhicule,
- la possibilité de choisir des orientations optimales pour les première et deuxième directions radiales par rapport à la direction longitudinale du véhicule, lors de la conception du train arrière.

Toutefois, ce type de montage présente l'inconvénient que, lorsque le manchon doit reprendre des efforts statiques verticaux, dus par exemple au poids du véhicule et à la suspension arrière, les bras du corps en élastomère subissent des contraintes de cisaillement, voire des contraintes de traction, qui sont nuisibles à la longévité du corps en élastomère.

La présente invention a notamment pour but de pallier cet inconvénient.

A cet effet, selon l'invention, un manchon antivibratoire du genre en question est caractérisé en ce que l'armature intérieure présente, au moins en regard des deux bras du corps en élastomère, deux zones d'appui en forme de coins qui s'étendent en convergeant vers l'axe central dans un premier sens parallèlement audit axe central,
en ce que la première armature annulaire présente également, au moins en regard des deux zones d'appui de l'armature intérieure, des première et deuxième zones d'appui complémentaires en forme de coins qui s'étendent en convergeant vers l'axe central dans ledit premier sens,
et en ce que chaque bras du corps en élastomère est adhérisé au moins à l'une des zones d'appui de l'armature intérieure et à l'une des zones d'appui complémentaires de la première armature annulaire.

Grâce à ces dispositions, le manchon antivibratoire selon l'invention est adapté pour supporter une charge statique axiale qui sollicite l'armature intérieure dans le premier sens par rapport à la première armature annulaire, et ce sans effet négatif sur la durée de vie du manchon antivibratoire.

En effet, grâce aux zones d'appui en forme de coins prévues sur l'armature intérieure et sur la première armature annulaire, la charge statique axiale supportée par le manchon antivibratoire se traduit par une précontrainte de compression dans le corps en élastomère. Cette précontrainte de compression est parfaitement bien supportée par le corps en élastomère et n'induit aucun vieillissement accéléré du manchon antivibratoire : au contraire, ladite précontrainte de compression empêche ou limite l'apparition de contraintes de traction lorsque l'armature intérieure subit des mouvements vibratoires par rapport à la première armature annulaire (c'est à dire pendant le roulage du véhicule lorsque le manchon antivibratoire selon l'invention est utilisé pour relier un train arrière de véhicule à la caisse du véhicule).

Dans des modes de réalisation préférés de l'invention, on peut éventuellement avoir recours en outre à l'une et/ou à l'autre des dispositions suivantes :
- le corps en élastomère est surmoulé sur la première armature annulaire et ladite première armature annulaire est entourée par une deuxième armature annulaire qui est solidarisée avec la première armature annulaire et avec le corps en élastomère, en délimitant avec ledit corps élastomère des première et deuxième chambres hydrauliques remplies de liquide qui sont séparées l'une de l'autre par les deux bras du corps en élastomère, les première et deuxième chambres hydrauliques communiquant l'une avec l'autre par au moins un passage étranglé qui est ménagé entre la première zone d'appui de la première armature annulaire et la deuxième armature annulaire ;
- la première zone d'appui de la première armature annulaire délimite avec la deuxième armature annulaire un premier conduit de liquide qui s'étend dans une direction circonférentielle par rapport à l'axe central et qui communique d'une part, avec la première chambre hydraulique et d'autre part, avec la deuxième chambre hydraulique, ce premier conduit de liquide présentant une section de passage au moins trois fois supérieure audit passage étranglé, le corps en élastomère comportant une première nervure axiale qui s'étend radialement et parallèlement à l'axe central depuis la première zone d'appui de la première armature annulaire jusqu'à un bord extérieur en contact avec la deuxième armature annulaire, ladite première nervure axiale obturant ainsi le premier conduit de liquide et présentant une souplesse suffisante pour permettre un certain découplage entre l'armature intérieure et les première et deuxième armatures annulaires vis à vis d'au moins certaines vibrations radiales de fréquence comprise entre 5 et 50 Hz ;
- le corps en élastomère comporte en outre un bourrelet qui s'étend dans la direction circonférentielle entre la première zone d'appui de la première armature annulaire et la deuxième armature annulaire, ce bourrelet délimitant ledit passage étranglé avec la deuxième armature annulaire et délimitant partiellement le premier conduit de liquide ;
- la deuxième zone d'appui de la première armature annulaire délimite avec la deuxième armature annulaire un deuxième conduit de liquide circonférentiel qui communique d'une part, avec la première chambre hydraulique et d'autre part, avec la deuxième chambre hydraulique, et le corps en élastomère comporte une deuxième nervure axiale qui s'étend radialement et parallèlement à l'axe central à partir de la deuxième zone d'appui de la première armature annulaire jusqu'à un bord extérieur en contact avec la deuxième armature annulaire, la deuxième nervure axiale obturant le deuxième conduit de liquide et présentant une souplesse suffisante pour permettre un certain découplage entre l'armature intérieure et les première et deuxième armatures annulaires vis à vis d'au moins certaines vibrations radiales de fréquence comprise entre 5 à 50 Hz ;
- la première armature annulaire est constituée par une bague métallique qui présente deux ouvertures disposées respectivement en correspondance avec les première et deuxième chambres hydrauliques, ces deux ouvertures étant séparées l'une de l'autre par lesdites première et deuxième zones d'appui qui sont constituées par des portions embouties de la bague métallique ;
- les première et deuxième chambres hydrauliques sont partiellement occupées par des inserts adaptés pour limiter les débattements radiaux entre d'une part, l'armature intérieure, et d'autre part, les première et deuxième armatures annulaires ;
- l'armature intérieure comporte deux bossages faisant saillie vers l'extérieur respectivement dans les première et deuxième chambres hydrauliques, en regard des inserts disposés dans ces chambres ;
- l'armature intérieure présente au moins une extrémité axiale solidarisée avec un organe de butée rigide qui s'étend sensiblement radialement par rapport à l'axe central en recouvrant au moins partiellement la deuxième armature annulaire, des plots en élastomère étant interposés axialement entre ledit organe de butée et une première extrémité de la deuxième armature annulaire ;
- la deuxième extrémité axiale de la deuxième armature annulaire comporte des plots en élastomère orientés axialement à l'opposé dudit organe de butée.

Par ailleurs, l'invention a également pour objet un véhicule automobile comportant une caisse supportée par au moins un train avant et un train arrière, le train arrière étant relié à la caisse au moins par deux manchons antivibratoires tels que définis ci-dessus disposés chacun avec leur axe central orienté verticalement et avec leurs première et deuxième directions radiales orientées de façon à corriger des déformations du train arrière qui tendraient à rendre survireur ledit train arrière, chaque manchon antivibratoire supportant au moins un effort de compression vertical statique orienté de façon à solliciter l'armature intérieure dans ledit premier sens par rapport à la première armature annulaire.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un véhicule automobile susceptible d'être équipé de manchons antivibratoires selon l'invention,
- la figure 2 est une vue schématique du train arrière du véhicule de la figure 1, équipé des manchons antivibratoires selon l'invention,
- la figure 3 est une vue en perspective montrant l'un des bras longitudinaux du train arrière de la figure 2, équipé d'un manchon antivibratoire selon une forme de réalisation de l'invention,
- la figure 4 est une vue écorchée du manchon antivibratoire équipant le bras longitudinal de la figure 3,
- la figure 5 est une vue de dessus du manchon antivibratoire de la figure 4,
- les figures 6 et 7 sont respectivement des vues en coupe selon les lignes VI-VI et VII-VII de la figure 5,
- la figure 8 est vue en perspective du corps en élastomère du manchon antivibratoire de la figure 4, dans la direction de la flèche VIII de la figure 5,
- et la figure 9 est une vue en perspective d'une armature intermédiaire noyée dans le corps en élastomère de la figure 8.

Sur les différentes figures, les mêmes références désignent des éléments identiques ou similaires.

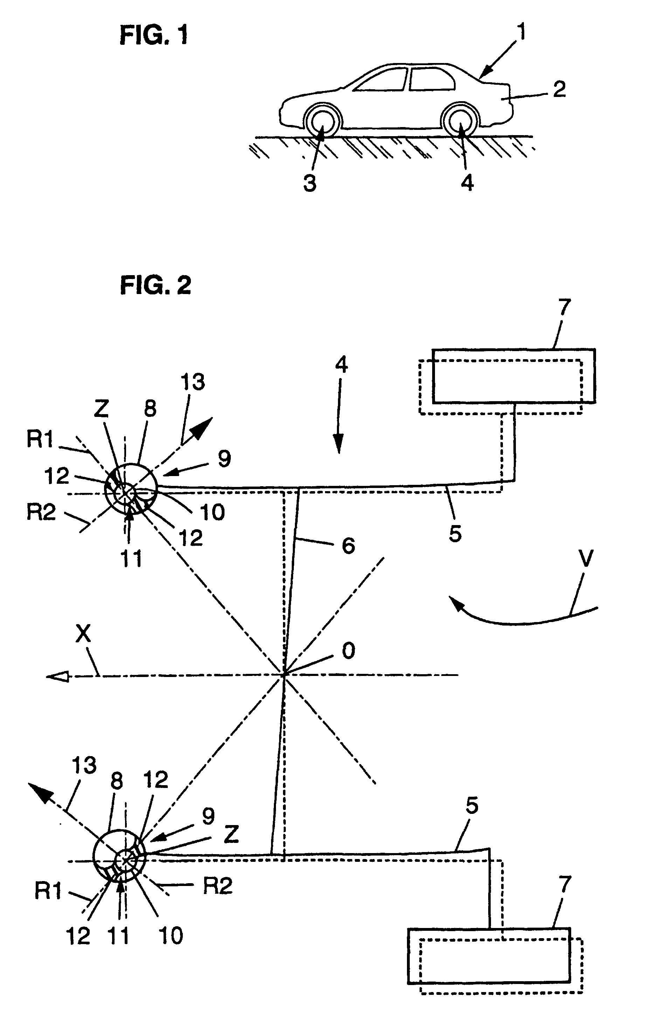

La figure 1 représente un véhicule automobile 1 dont la caisse 2 est supportée par un train avant 3 et un train arrière 4.

Comme représenté sur la figure 2, le train arrière 4 peut par exemple être un train à essieu souple, comportant deux bras métalliques longitudinaux 5 qui s'étendent selon la direction longitudinale X du véhicule et qui sont reliés entre eux par une traverse métallique 6 présentant par exemple une certaine souplesse en flexion et/ou en torsion (le train arrière 4 pourrait le cas échéant être d'un type différent, par exemple de type tirant longitudinal multi-bras).

Chacun des bras longitudinaux 5 porte à son extrémité arrière l'une des roues arrière 7 du véhicule tandis que l'extrémité avant dudit bras longitudinal 5 est reliée à l'armature extérieure rigide 8 d'un manchon antivibratoire 9.

L'armature annulaire extérieure 8 de chaque manchon se présente sensiblement sous la forme d'une pièce cylindrique d'axe vertical qui entoure une armature tubulaire intérieure 10 rigide et généralement métallique. Cette armature intérieure 10, qui est fixée à la caisse du véhicule, s'étend longitudinalement selon un axe central vertical Z et est reliée à l'armature annulaire extérieure 8 par l'intermédiaire d'un corps en élastomère 11 qui présente deux bras d'élastomère 12 diamétralement opposés, s'étendant selon une première direction radiale R1.

Ainsi, chaque manchon antivibratoire 9 présente une raideur élastique relativement élevée dans la direction radiale R1, et une raideur élastique plus faible dans la direction radiale R2 perpendiculaire à R1, tandis que la raideur élastique de chaque manchon antivibratoire 9 selon l'axe central vertical Z est généralement fixée à une faible valeur pour améliorer le confort du véhicule.

Les orientations respectives des directions radiales R1, R2 des deux manchons antivibratoires 9 du train arrière sont choisies de façon à induire un effet de braquage du train arrière qui puisse compenser le caractère naturellement survireur dudit train arrière. En particulier, dans l'exemple représenté, les directions radiales R1 de plus forte rigidité des manchons antivibratoires 9 sont choisies de façon à converger vers l'arrière en un point central O situé entre les deux bras longitudinaux 5 et avantageusement au voisinage de la traverse 6.

Ainsi, lorsque le véhicule prend un virage dans la direction de la flèche V, le train arrière 4, qui présentait initialement la position représentée en pointillé sur la figure 2, prend la position représentée en trait plein sur ladite figure 2 : autrement dit, les deux bras longitudinaux 5 et la traverse 6 fléchissent sous l'effet de l'inertie du véhicule, ce qui, sans les manchons antivibratoires 9, aurait tendance à donner aux roues arrières 7 une orientation diminuant le rayon de courbure du virage et rendant par conséquent le véhicule survireur.

Cette tendance est évitée grâce aux manchons antivibratoires 9, puisque les armatures extérieures 8 de ces deux manchons se déplacent dans le sens indiqué par la flèche 13, selon les directions R2 de plus faible raideur des deux manchons antivibratoires. Ce mouvement compense la déformation du train arrière 4 et maintient les roues arrières 7 sensiblement parallèles à l'axe longitudinal X du véhicule : on évite ainsi que le véhicule ait un comportement survireur dans les virages.

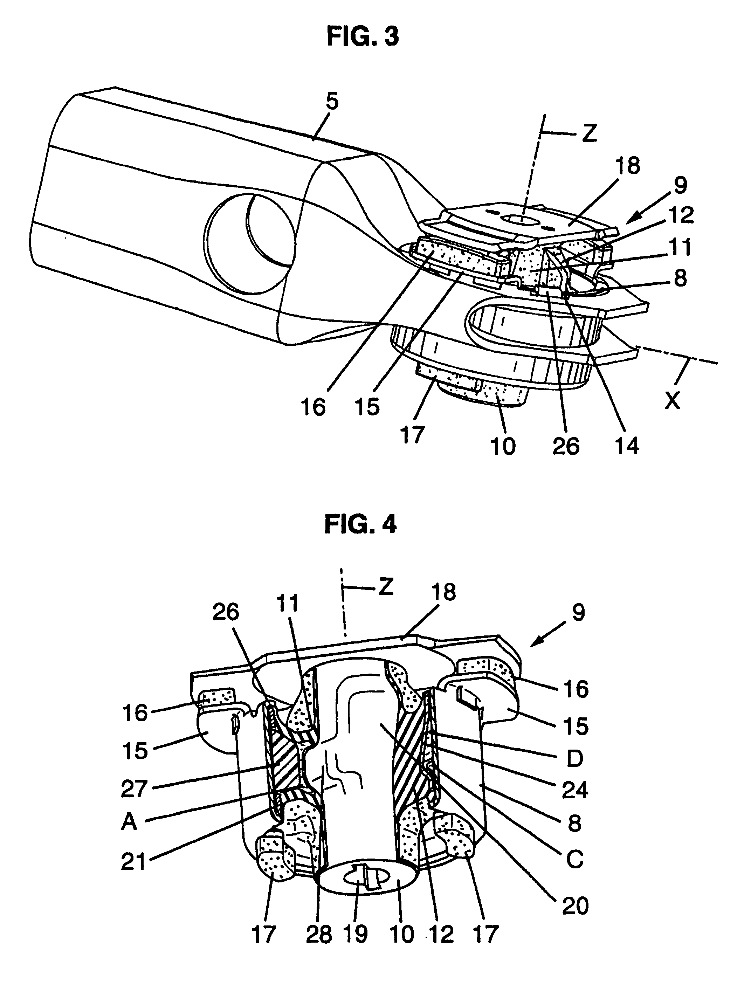

Comme représenté sur les figures 3 et 4, l'armature annulaire extérieure 8 de chaque manchon antivibratoire 9 peut avantageusement être une pièce de tôle emboutie et découpée qui est reçue dans un logement vertical 14 du bras longitudinal 5 correspondant, le bord supérieur de l'armature 8 représentant par exemple deux ailes horizontales 15 qui s'étendent radialement vers l'extérieur et qui viennent en appui sur le bras 5 autour du logement 14.

Un plot en élastomère 16 peut éventuellement être moulé sur chaque aile horizontale 15, et deux plots en élastomère 17 peuvent également le cas échéant être moulés à l'extrémité inférieure de l'armature 8 en faisant saillie vers le bas. Les plots supérieurs 16 sont destinés à coopérer par butée avec un organe de butée 18 telle qu'une plaque d'appui, qui est solidarisée avec l'extrémité supérieure de l'armature intérieure 10 et qui destinée à être fixée à la caisse du véhicule avec ladite armature intérieure 10. Les plots en élastomère 16 limitent donc les débattements verticaux relatifs entre l'armature extérieure 8 et l'armature intérieure 10, dans le sens du rapprochement entre l'organe de butée 18 et les ailes horizontales 15 de l'armature extérieure.

Par ailleurs, les plots inférieurs 17 en élastomère coopèrent par butée avec une partie solidaire de la caisse 2 du véhicule, de façon à limiter les débattements vers le bas de l'extrémité arrière du bras longitudinal 5.

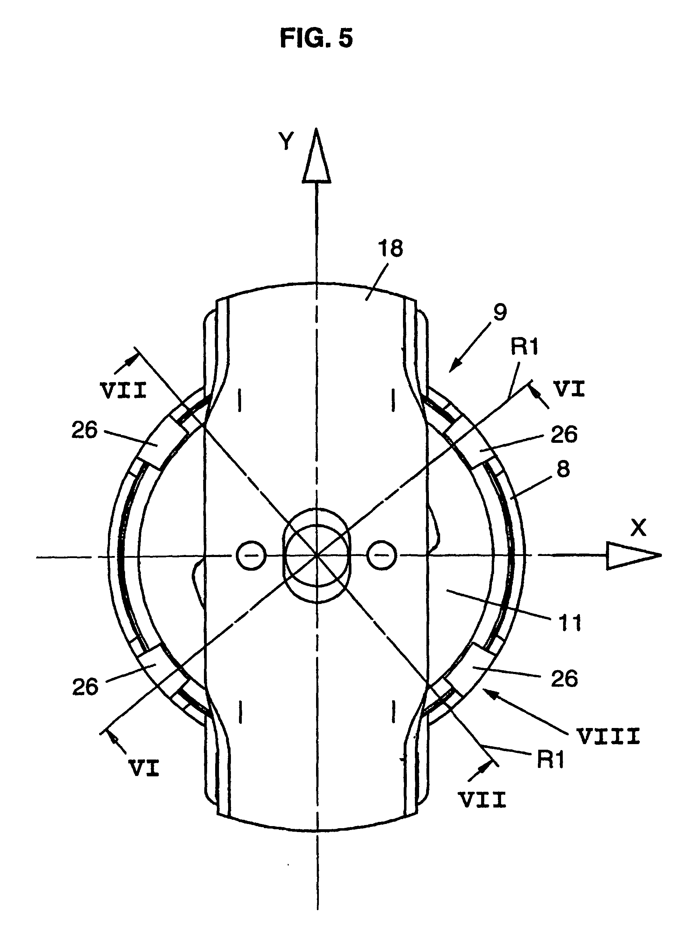

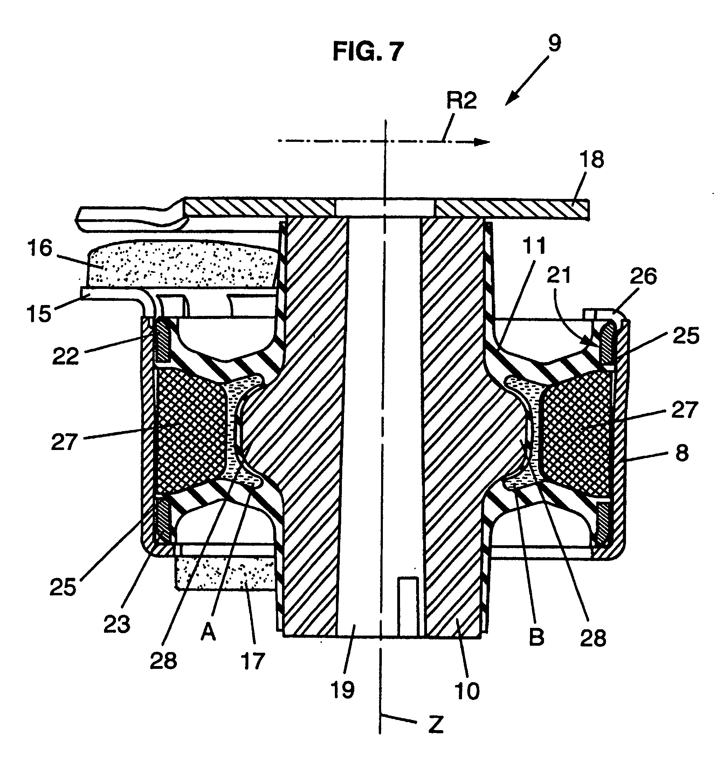

Par ailleurs, comme représenté sur les figures 5 à 9, l'armature intérieure 10 du manchon antivibratoire, qui peut avantageusement être réalisée par moulage en alliage léger, se présente sous la forme d'une pièce tubulaire percée d'un trou central 19 qui permet le passage d'une vis ou autre organe de fixation pour fixer l'armature intérieure 10 à la caisse du véhicule.

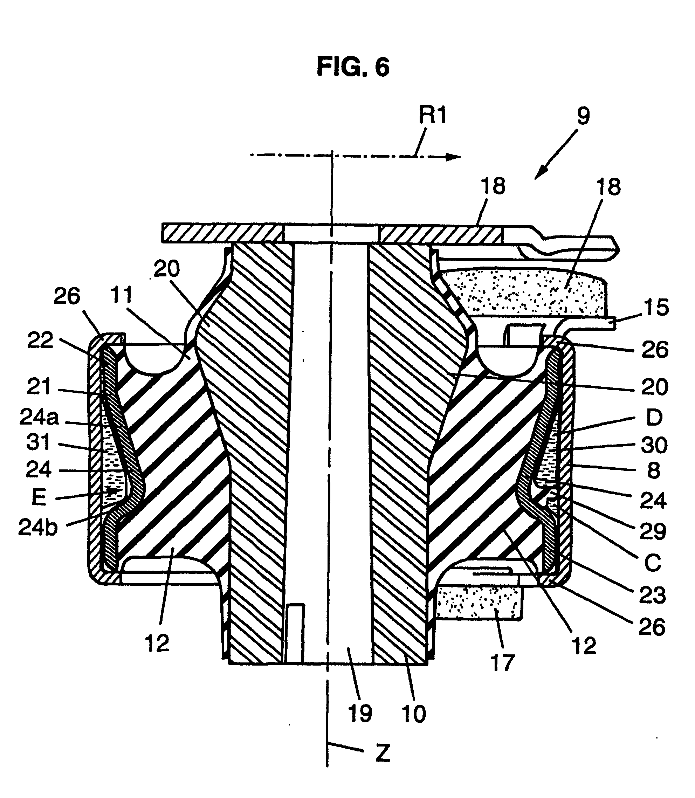

La surface extérieure de l'armature 10 comporte, en correspondance avec les deux bras 12 du corps en élastomère, deux zones d'appui 20 en forme de coins qui font saillie radialement vers l'extérieur et qui convergent vers le bas en direction l'axe central Z (voir figures 4 et 6).

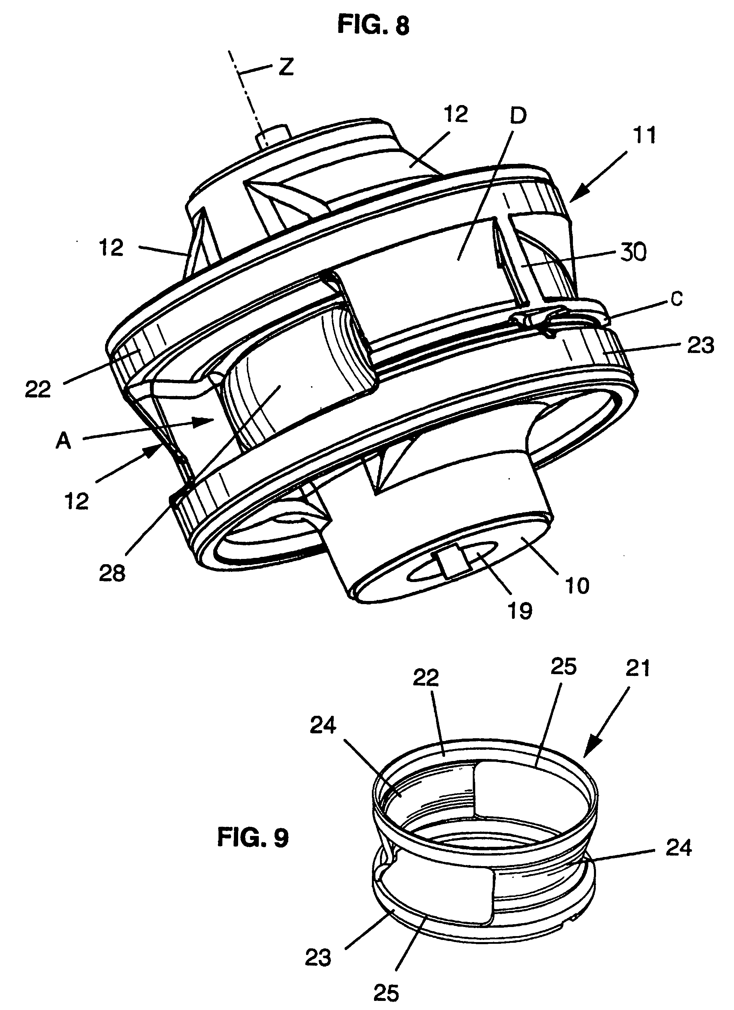

Le corps en élastomère 11, quant à lui est surmoulé et adhérisé sur la surface extérieure de l'armature intérieure 10, et s'étend radialement vers l'extérieur jusqu'à une armature annulaire intermédiaire 21 qui se présente par exemple sous la forme d'une bague de tôle découpée et emboutie, bien visible sur la figure 9.

Cette armature intermédiaire 21 présente deux portées annulaires continues 22, 23, respectivement supérieure et inférieure, qui sont reliées entre elles par deux zones d'appui 24 embouties vers l'intérieur, délimitant avec les portées annulaires 22, 23 deux fenêtres ouvertes 25.

Comme on peut le voir sur les figures 4 et 6, les zones d'appui 24 sont disposées en regard des zones d'appui 20 de l'armature intérieure 10 et présentent chacune :
- une portion supérieure 24a qui s'étend parallèlement à la zone d'appui 20 correspondante en convergeant vers le bas et vers l'intérieur,
- une partie inférieure 24b qui forme un angle plus important que la partie supérieure 24a avec la verticale et qui s'étend vers le bas en divergeant fortement vers l'extérieur.

Grâce à ces dispositions, les efforts statiques dus au poids du véhicule 1 et à la suspension arrière, qui se traduisent par une sollicitation vers le haut de l'armature extérieure 8, génèrent une précontrainte de compression dans les bras 11 du corps en élastomère, au lieu de générer des contraintes de cisaillement et de traction. On améliore ainsi la longévité du manchon antivibratoire, et ce d'autant plus que cette précontrainte permet de supprimer ou de limiter en outre les contraintes de traction au cours du fonctionnement dynamique du manchon antivibratoire.

Par ailleurs, comme on peut le voir sur les figures 4, 7 et 8, le corps en élastomère 5 comporte deux cavités ménagées en correspondance avec les fenêtres 25 de l'armature intermédiaire entre les bras 12. Ces cavités délimitent avec l'armature extérieure 8 deux chambres hydrauliques A, B remplies de liquide, qui sont fermées de façon étanche par serrage radial de l'armature extérieure 8 sur les portées annulaires 22, 23 de l'armature intermédiaire 21, l'armature extérieure 8 étant en outre solidarisée axialement à l'armature intermédiaire 21 par des pattes 26 de ladite armature extérieure qui sont serties contre les extrémités axiales de l'armature intermédiaire 21.

Les deux chambres hydrauliques A, B sont alignées mutuellement dans la direction de plus faible raideur élastique R2 du manchon antivibratoire. Pour limiter les débattements radiaux entre l'armature intérieure 10 et l'armature extérieure 8 dans la direction R2, chacune des chambres hydrauliques A, B peut avantageusement recevoir un insert 27 réalisé par exemple en matière plastique sensiblement rigide et adapté pour coopérer par butée avec un bossage 28 faisant saillie radialement vers l'extérieur à partir de l'armature intérieure 10 dans la chambre hydraulique correspondante A,B.

Les deux chambres hydrauliques A, B communiquent entre elles par l'intermédiaire d'un passage étranglé C qui peut avantageusement être délimité entre l'armature extérieure 8 et une gorge circonférentielle ménagée dans un bourrelet d'élastomère 29 qui s'étend circonférentiellement dans la partie inférieure et extérieure d'une des zones d'appui 24 de l'armature intermédiaire 21, dite première zone d'appui 24.

Ainsi, les mouvements vibratoires radiaux relatifs entre l'armature intérieure 10 et l'armature extérieure 8 se traduisent par des échanges de liquide entre les chambres hydrauliques A, B au travers du passage étranglé C, et ces échanges de liquide permettent d'amortir lesdits mouvements vibratoires radiaux, de façon connue en soi.

Ladite première zone d'appui 24 de l'armature intermédiaire 21 délimite en outre avec l'armature extérieure 8, au-dessus du bourrelet d'élastomère 29, un premier conduit de liquide D qui communique d'une part avec la chambre hydraulique A et d'autre part avec la chambre hydraulique B. Ce premier conduit de liquide D est obturé par une nervure axiale 30 en élastomère, de relativement faible épaisseur, qui s'étend parallèlement à l'axe Z et radialement vers l'extérieur, jusqu'à un bord extérieur en appui étanche contre la surface intérieure de l'armature 8.

Cette nervure 30 est suffisamment souple pour former un clapet de découplage, qui, compte tenu de la relativement grande section de passage du premier conduit de liquide D (en pratique, au moins trois fois supérieure à la section du passage étranglé C), permet de transmettre directement d'une chambre hydraulique à l'autre les vibrations de relativement faible amplitude (par exemple, inférieure à 1 mm) et de relativement grande fréquence (par exemple, comprise entre 5 et 50 Hz), ce qui permet de filtrer ces vibrations de faible amplitude et de grande fréquence sans les transmettre d'une armature à l'autre.

De la même façon, la deuxième zone d'appui 24 de l'armature intermédiaire 21 délimite avec l'armature extérieure 8 un deuxième conduit de liquide E qui est obturé par une nervure axiale 31 s'étendant parallèlement à l'axe Z et radialement vers l'extérieur jusqu'à un bord externe en contact étanche avec l'armature extérieure 8. Cette deuxième nervure axiale 31 forme également un clapet de découplage, de la même façon que la nervure 30 susmentionnée.

## Revendications

1. Manchon antivibratoire comportant :
- une armature intérieure (10) rigide qui s'étend longitudinalement selon un axe central (Z),
- au moins une première armature annulaire (21) rigide qui entoure l'armature intérieure (10) ainsi que l'axe central (Z), et au moins un corps en élastomère (11) qui relie l'armature intérieure (10) à la première armature annulaire (21), ce corps en élastomère comprenant deux bras (12) diamétralement opposés qui s'étendent selon une première direction radiale (R1) , chacun depuis l'armature intérieure (10) jusqu'à ladite première armature annulaire (21), le corps en élastomère (11) étant conformé pour que le manchon antivibratoire présente une raideur élastique relativement élevée dans ladite première direction radiale (R1) et une raideur élastique plus faible dans une deuxième direction radiale (R2) sensiblement perpendiculaire à ladite première direction radiale (R1),
**caractérisé en ce que** l'armature intérieure (10) présente, au moins en regard des deux bras (12) du corps en élastomère, deux zones d'appui (20) en forme de coins qui s'étendent en convergeant vers l'axe central (Z) dans un premier sens parallèlement audit axe central,
**en ce que** la première armature annulaire (21) présente également, au moins en regard des deux zones d'appui (20) de l'armature intérieure, des première et deuxième zones d'appui complémentaires (24) en forme de coins qui s'étendent en convergeant vers l'axe central (Z) dans ledit premier sens,
**et en ce que** chaque bras (12) du corps en élastomère est adhérisé au moins à l'une des zones d'appui (20) de l'armature intérieure et à l'une des zones d'appui complémentaires (24) de la première armature annulaire.

2. Manchon antivibratoire selon la revendication 1, dans lequel le corps en élastomère (11) est surmoulé sur la première armature annulaire (21) et ladite première armature annulaire est entourée par une deuxième armature annulaire (8) qui est solidarisée avec la première armature annulaire (21) et avec le corps en élastomère (11), en délimitant avec ledit corps élastomère des première et deuxième chambres hydrauliques (A, B) remplies de liquide qui sont séparées l'une de l'autre par les deux bras (12) du corps en élastomère, les première et deuxième chambres hydrauliques (A, B) communiquant l'une avec l'autre par au moins un passage étranglé (C) qui est ménagé entre la première zone d'appui (24) de la première armature annulaire et la deuxième armature annulaire (8).

3. Manchon antivibratoire selon la revendication 2, dans lequel la première zone d'appui (24) de la première armature annulaire délimite avec la deuxième armature annulaire (8) un premier conduit de liquide (D) qui s'étend dans une direction circonférentielle par rapport à l'axe central (Z) et qui communique d'une part, avec la première chambre hydraulique (A) et d'autre part, avec la deuxième chambre hydraulique (B), ce premier conduit de liquide (D) présentant une section de passage au moins trois fois supérieure audit passage étranglé (C), le corps en élastomère comportant une première nervure axiale (30) qui s'étend radialement et parallèlement à l'axe central (Z) depuis la première zone d'appui (24) de la première armature annulaire jusqu'à un bord extérieur en contact avec la deuxième armature annulaire (8), ladite première nervure axiale (30) obturant ainsi le premier conduit de liquide (D) et présentant une souplesse suffisante pour permettre un certain découplage entre l'armature intérieure (10) et les première et deuxième armatures annulaires (21, 8) vis à vis d'au moins certaines vibrations radiales de fréquence comprise entre 5 et 50 Hz.

4. Manchon antivibratoire selon la revendication 3, dans lequel le corps en élastomère comporte en outre un bourrelet (29) qui s'étend dans la direction circonférentielle entre la première zone d'appui (24) de la première armature annulaire et la deuxième armature annulaire (8), ce bourrelet (29) délimitant ledit passage étranglé (C) avec la deuxième armature annulaire (8) et délimitant partiellement le premier conduit de liquide (D).

5. Manchon antivibratoire selon l'une quelconque des revendications 2 à 4, dans lequel la deuxième zone d'appui (24) de la première armature annulaire délimite avec la deuxième armature annulaire (8) un deuxième conduit de liquide circonférentiel (E) qui communique d'une part, avec la première chambre hydraulique (A) et d'autre part, avec la deuxième chambre hydraulique (B), et le corps en élastomère (11) comporte une deuxième nervure axiale (31) qui s'étend radialement et parallèlement à l'axe central (Z) à partir de la deuxième zone d'appui (24) de la première armature annulaire jusqu'à un bord extérieur en contact avec la deuxième armature annulaire (8), la deuxième nervure axiale (31) obturant le deuxième conduit de liquide (E) et présentant une souplesse suffisante pour permettre un certain découplage entre l'armature intérieure (10) et les première et deuxième armatures annulaires (21, 8) vis à vis d'au moins certaines vibrations radiales de fréquence comprise entre 5 et 50 Hz.

6. Manchon antivibratoire selon l'une quelconque des revendications 2 à 5, dans lequel la première armature annulaire (21) est constituée par une bague métallique qui présente deux ouvertures (25) disposées respectivement en correspondance avec les première et deuxième chambres hydrauliques (A, B), ces deux ouvertures étant séparées l'une de l'autre par lesdites première et deuxième zones d'appui (24) qui sont constituées par des portions embouties de la bague métallique.

7. Manchon antivibratoire selon l'une quelconque des revendications 2 à 6, dans lequel les première et deuxième chambres hydrauliques (A, B) sont partiellement occupées par des inserts (27) adaptés pour limiter les débattements radiaux entre d'une part, l'armature intérieure (10), et d'autre part, les première et deuxième armatures annulaires (21, 8).

8. Manchon antivibratoire selon la revendication 7, dans lequel l'armature intérieure (10) comporte deux bossages (28) faisant saillie vers l'extérieur respectivement dans les première et deuxième chambres hydrauliques (A, B), en regard des inserts (27) disposés dans ces chambres.

9. Manchon antivibratoire selon l'une quelconque des revendications précédentes, dans lequel l'armature intérieure (10) présente au moins une extrémité axiale solidarisée avec un organe de butée rigide (18) qui s'étend sensiblement radialement par rapport à l'axe central (Z) en recouvrant au moins partiellement la deuxième armature annulaire (8), des plots en élastomère (16) étant interposés axialement entre ledit organe de butée (18) et une première extrémité de la deuxième armature annulaire (8).

10. Manchon antivibratoire selon la revendication 9, dans lequel la deuxième extrémité axiale de la deuxième armature annulaire (8) comporte des plots en élastomère (17) orientés axialement à l'opposé dudit organe de butée.

11. Véhicule automobile comportant une caisse (2) supportée par au moins un train avant (3) et un train arrière (4), le train arrière (4) étant relié à la caisse (2) au moins par deux manchons antivibratoires (9) selon l'une quelconque des revendications précédentes, disposés chacun avec leur axe central (Z) orienté verticalement et avec leurs première et deuxième directions radiales (R1, R2) orientées de façon à corriger des déformations du train arrière (4) qui tendraient à rendre survireur ledit train arrière, chaque manchon antivibratoire (9) supportant au moins un effort de compression vertical statique orienté de façon à solliciter l'armature intérieure (10) dans ledit premier sens par rapport à la première armature annulaire (21).

## Patentansprüche

1. Schwingungsdämpfendes Lager umfassend:
- einen starren, inneren Anker (10), der sich entlang einer Mittelachse (Z) in Längsrichtung erstreckt,
- wenigstens einen ersten starren, ringförmigen Anker (21), der den inneren Anker (10) sowie die Mittelachse (Z) umschließt, und wenigstens einen Körper aus Elastomer (11), der den inneren Anker (10) mit dem ersten ringförmigen Anker (21) verbindet, wobei dieser Körper aus Elastomer zwei diametral gegenüberliegende Arme (12) umfasst, die sich in einer ersten radialen Richtung (R1) erstrecken, und zwar jeweils von dem inneren Anker (10) bis zu dem ersten ringförmigen Anker (21), wobei der Körper aus Elastomer (11) so angepasst ist, dass das schwingungsdämpfende Lager in der ersten radialen Richtung (R1) eine relativ hohe elastische Steifigkeit und in einer zweiten radialen Richtung (R2), die im Wesentlichen senkrecht zur ersten radialen Richtung (R1) steht, eine schwächere Steifigkeit aufweist,
**dadurch gekennzeichnet, dass** der innere Anker (10), wenigstens in Hinsicht auf die beiden Arme (12) des Körpers aus Elastomer, zwei keilförmige Stützzonen (20) aufweist, die sich zur Mittelachse (Z) hin konvergierend in einer ersten Richtung parallel zur Mittelachse erstrecken,
**dass** der erste ringförmige Anker (21) ebenfalls, wenigstens in Hinsicht auf die beiden Stützzonen (20) des inneren Ankers, eine erste und zweite komplementäre keilförmige Stützzone (24) aufweist, die sich zur Mittelachse (Z) hin konvergierend in der ersten Richtung erstrecken,
**und dass** jeder Arm (12) des Körpers aus Elastomer wenigstens an einer der Stützzonen (20) des inneren Ankers und an einer der komplementären Stützzonen (24) des ersten ringförmigen Ankers anhaftet.

2. Schwingungsdämpfendes Lager nach Anspruch 1, bei dem der Körper aus Elastomer (11) an dem ersten ringförmigen Anker (21) angeformt ist und der erste ringförmige Anker von einem zweiten ringförmigen Anker (8) umschlossen ist, der mit dem ersten ringförmigen Anker (21) und mit dem Körper aus Elastomer (11) fest verbunden ist, so dass mit dem Körper aus Elastomer eine erste und eine zweite, mit Flüssigkeit gefüllte, Hydraulikkammer (A, B) abgegrenzt werden, die durch die zwei Arme (12) des Körpers aus Elastomer von einander getrennt sind, wobei die erste und die zweite Hydraulikkammer (A, B) durch wenigstens einen engen Durchlass (C), der zwischen der ersten Stützzone (24) des ersten ringförmigen Ankers und dem zweiten ringförmigen Anker (8) angeordnet ist, miteinander kommunizieren.

3. Schwingungsdämpfendes Lager nach Anspruch 2, bei dem die erste Stützzone (24) des ersten ringförmigen Ankers mit dem zweiten ringförmigen Anker (8) einen ersten Flüssigkeitskanal (D) abgrenzt, der sich in einer Umfangsrichtung in Bezug auf die Mittelachse (Z) erstreckt und einerseits mit der ersten Hydraulikkammer (A) und andererseits mit der zweiten Hydraulikkammer (B) kommuniziert, wobei dieser erste Flüssigkeitskanal (D) einen wenigstens drei Mal größeren Strömungsquerschnitt als der enge Durchlass (C) aufweist, wobei der Körper aus Elastomer eine erste axiale Rippe (30) umfasst, die sich radial und parallel zur Mittelachse (Z) von der ersten Stützzone (24) des ersten ringförmigen Ankers bis zu einem äußeren Rand erstreckt, der mit dem zweiten ringförmigen Anker (8) in Kontakt ist, wobei die erste axiale Rippe (30) so den ersten Flüssigkeitskanal (D) verschließt und eine ausreichende Flexibilität aufweist, um eine gewisse Entkopplung zwischen dem inneren Anker (10) und dem ersten und zweiten ringförmigen Anker (21, 8) gegenüber wenigstens bestimmten radialen Vibrationen mit Frequenzen, die zwischen 5 und 50 Hz liegen, zu ermöglichen.

4. Schwingungsdämpfendes Lager nach Anspruch 3, bei welchem der Körper aus Elastomer außerdem einen Wulst (29) umfasst, der sich in Umfangsrichtung zwischen der ersten Stützzone (24) des ersten ringförmigen Ankers und dem zweiten ringförmigen Anker (8) erstreckt, wobei dieser Wulst (29) den engen Durchlass (C) mit dem zweiten ringförmigen Anker (8) begrenzt und den ersten Flüssigkeitskanal (D) teilweise begrenzt.

5. Schwingungsdämpfendes Lager nach einem der Ansprüche 2 bis 4, bei dem die zweite Stützzone (24) des ersten ringförmigen Ankers mit dem zweiten ringförmigen Anker (8) einen zweiten Umfangs-Flüssigkeitskanal (E) begrenzt, der einerseits mit der ersten Hydraulikkammer (A) und andererseits mit der zweiten Hydraulikkammer (B) kommuniziert, und der Körper aus Elastomer (11) eine zweite axiale Rippe (31) umfasst, die sich radial und parallel zur Mittelachse (Z) von der zweiten Stützzone (24) des ersten ringförmigen Ankers aus bis zu einem äußeren Rand, der mit dem zweiten ringförmigen Anker (8) in Kontakt ist, erstreckt, wobei die zweite axiale Rippe (31) den zweiten Flüssigkeitskanal (E) verschließt und eine ausreichende Flexibilität aufweist, um eine gewisse Entkopplung zwischen dem inneren Anker (10) und dem ersten und zweiten ringförmigen Anker (21, 8) gegenüber wenigstens bestimmten radialen Vibrationen mit Frequenzen, die zwischen 5 und 50 Hz liegen, zu ermöglichen.

6. Schwingungsdämpfendes Lager nach einem der Ansprüche 2 bis 5, bei welchem der erste ringförmige Anker (21) von einem Metallring gebildet wird, der zwei Öffnungen (25) aufweist, die jeweils in Übereinstimmung mit der ersten und zweiten Hydraulikkammer (A, B) angeordnet sind, wobei diese beiden Öffnungen durch die erste und zweite Stützzone (24), welche durch gezogene Abschnitte des Metallringes gebildet werden, voneinander getrennt sind.

7. Schwingungsdämpfendes Lager nach einem der Ansprüche 2 bis 6, bei dem die erste und die zweite Hydraulikkammer (A, B) teilweise von Einsätzen (27) belegt sind, die dazu angepasst sind, die radialen Ausfederungen zwischen einerseits dem inneren Anker (10) und andererseits dem ersten und zweiten ringförmigen Anker (21, 8) zu begrenzen.

8. Schwingungsdämpfendes Lager nach Anspruch 7, bei welchem der innere Anker (10) zwei Buckel (28) umfasst, die nach außen jeweils in die erste und zweite Hydraulikkammer (A, B) in Hinblick auf die in diesen Kammern angeordneten Einsätze (27) vorspringen.

9. Schwingungsdämpfendes Lager nach einem der vorhergehenden Ansprüche, bei welchem der innere Anker (10) wenigstens ein axiales Ende aufweist, das mit einem starren Anschlag-Bauteil (18) fest verbunden ist, das sich im Wesentlichen radial in Bezug auf die Mittelachse (Z) erstreckt und den zweiten ringförmigen Anker (8) wenigstens teilweise überdeckt, wobei Kontaktklötze aus Elastomer (16) axial zwischen das Anschlag-Bauteil (18) und ein erstes Ende des zweiten ringförmigen Ankers (8) eingefügt sind.

10. Schwingungsdämpfendes Lager nach Anspruch 9, bei dem das zweite axiale Ende des zweiten ringförmigen Ankers (8) Kontaktklötze aus Elastomer (17) umfasst, die axial gegenüber dem Anschlag-Bauteil orientiert sind.

11. Kraftfahrzeug umfassend eine Karosserie (2), die von wenigstens einer Vorderachse (3) und einer Hinterachse (4) getragen wird, wobei die Hinterachse (4) mit der Karosserie (2) durch wenigstens zwei schwingungsdämpfende Lager (9) nach einem der vorhergehenden Ansprüche verbunden ist, welche beide mit ihrer Mittelachse (Z) senkrecht ausgerichtet und mit ihrer ersten und zweiten radialen Richtung (R1, R2) derart ausgerichtet angeordnet sind, dass Verformungen der Hinterachse (4), welche die Tendenz die Hinterachse zum Übersteuern zu bringen, korrigiert werden, wobei jedes schwingungsdämpfende Lager (9) wenigstens eine statische, vertikale Druckbeanspruchung aufnimmt, die derartig ausgerichtet ist, dass der innere Anker (10) in der ersten Richtung in Bezug auf den ersten ringförmigen Anker (21) belastet wird.

## Claims

1. An antivibration sleeve comprising:
- a rigid inner strength member which extends longitudinally along a central axis; and
- at least a first rigid annular strength member which surrounds the inner strength member and the central axis, and at least one elastomer body connecting the inner strength member to the first annular strength member, said elastomer body including two diametrically opposite arms each extending along a first radial direction from the inner strength member to said first annular strength member, the elastomer body being shaped so that the antivibration sleeve presents relatively high elastic stiffness in said first radial direction and lower elastic stiffness in a second radial direction substantially perpendicular to said first radial direction;
**wherein** the inner strength member presents, at least in register with the two arms of the elastomer body, two wedge-shaped bearing zones which extend so as to converge towards the central axis in a first direction parallel to said central axis;
**wherein** the first annular strength member also presents, at least in register with the two bearing zones of the inner strength member, first and second complementary bearing zones in the form of wedges which converge towards the central axis in said first direction; and
**wherein** each arm of the elastomer body is bonded to at least one of the bearing zones of the inner strength member and to one of the complementary bearing zones of the first annular strength member.

2. An antivibration sleeve according to claim 1, in which the elastomer body is overmolded on the first annular strength member and said first annular strength member is surrounded by a second strength member which is secured to the first annular strength member and to the elastomer body, co-operating with said elastomer body to define first and second hydraulic chambers filled with liquid and separated from each other by the two arms of the elastomer body, the first and second hydraulic chambers communicating with each other via at least one narrow passage which is provided between the first bearing zone of the first annular strength member, and the second strength member.

3. An antivibration sleeve according to claim 2, in which the first bearing zone of the first annular strength member co-operates with the second annular strength member to define a first liquid duct which extends in a circumferential direction about the central axis and which communicates firstly with the first hydraulic chamber and secondly with the second hydraulic chamber, said first liquid duct presenting a flow section that is at least three times greater than the flow section of said narrow passage, the elastomer body having a first axial rib which extends radially and parallel to the central axis from the first bearing zone of the first annular strength member to an outside edge in contact with the second annular strength member, said first axial rib thus closing the first liquid duct and presenting sufficient flexibility to enable a certain amount of decoupling between the inner strength member and the first and second annular strength members with respect to at least some radial vibrations at a frequency lying in the range 5 Hz to 50 Hz.

4. An antivibration sleeve according to claim 3, in which the elastomer body further includes a bead which extends in the circumferential direction between the first bearing zone of the first annular strength member and the second annular strength member, said bead co-operating with the second annular strength member to define said narrow passage and also defining part of the first liquid duct.

5. An antivibration sleeve according to claim 2, in which the second bearing zone of the first annular strength member co-operates with the second annular strength member to define a second circumferential liquid duct which communicates firstly with the first hydraulic chamber and secondly with the second hydraulic chamber, and the elastomer body includes a second axial rib which extends radially and parallel to the central axis from the second bearing zone of the first annular strength member to an outside edge in contact with the second annular strength member, the second axial rib closing the second liquid duct and presenting sufficient flexibility to enable a certain amount of decoupling between the inner strength member and the first and second annular strength members with respect to at least some radial vibrations at a frequency lying in the range 5 Hz to 50 Hz.

6. An antivibration sleeve according to claim 2, in which the first annular strength member is constituted by a metal ring which presents two openings disposed respectively in register with the first and second hydraulic chambers, these two openings being separated from each other by said first and second bearing zones which are constituted by stamped portions of the metal ring.

7. An antivibration sleeve according to claim 2, in which the first and second hydraulic chambers are occupied in part by inserts adapted to limit radial movements between the inner strength member and the first and second annular strength members.

8. An antivibration sleeve according to claim 7, in which the inner strength member has two bulges projecting outwards respectively into the first and second hydraulic chambers in register with the inserts disposed in said chambers.

9. An antivibration sleeve according to claim 1, in which the inner strength member presents at least one axial end secured to a rigid abutment member which extends substantially radially relative to the central axis overlying at least part of the second annular strength member, elastomer studs being interposed axially between said abutment member and a first end of the second annular strength member.

10. An antivibration sleeve according to claim 9, in which the second axial end of the second annular strength member has elastomer studs extending axially away from said abutment member.

11. A motor vehicle comprising a body supported at least by a front axle and a rear axle, the rear axle being connected to the body via at least two antivibration sleeves according to claim 1, each sleeve being disposed with its central axis oriented vertically and with its first and second radial directions oriented in such a manner as to correct deformations of the rear axle tending to make said rear axle oversteer, each antivibration sleeve supporting at least a static vertical compression load oriented in such a manner as to urge the inner strength member in said first direction relative to the first annular strength member.
